# NEW EUROPEAN PATENT SPECIFICATION

(11) **EP 2 890 544 B2**
(45) Date of publication and mention of the opposition decision: **15.11.2023**
(45) Mention of the grant of the patent: 30.11.2016
(21) Application number: 12753139.0
(22) Date of filing: 31.08.2012
(51) Int. Cl.: B29C 49/00, B65D 23/10, B65D 1/02, C08G 63/18

(54) **BOTTLE, METHOD OF MAKING THE SAME AND USE OF FDCA AND DIOL MONOMERS IN SUCH BOTTLE**
FLASCHE, VERFAHREN ZUR HERSTELLUNG DAVON UND VERWENDUNG VON FDCA- UND DIOLMONOMEREN IN SOLCH EINER FLASCHE
BOUTEILLE, SON PROCÉDÉ DE FABRICATION ET UTILISATION DE MONOMÈRES FDCA ET DIOL DANS UNE TELLE BOUTEILLE

(43) Date of publication of application: 08.07.2015
(73) Proprietor: Société Anonyme des Eaux Minérales d'Evian et en Abrégé "S.A.E.M.E", 74500 Evian-les-Bains (FR)
(72) Inventor: BOUFFAND, Marie-Bernard, F-75200 Le Lyaud (FR); COLLOUD, Alain, F-74200 Reyvroz (FR); REUTENAUER, Philippe, 71000 Macon (FR)
(74) Representative: Plasseraud IP
(86) International application number: PCT/EP2012/066996
(87) International publication number: WO 2014/032730

(56) References cited:
- WO-A1-2013/182541
- US-A1- 2007 257 003
- US-A1- 2007 257 003
- US-A1- 2010 174 044
- DATABASE WPI Week 200901 Thomson Scientific, London, GB; AN 2009-A17075 XP002697783, & JP 2008 291244 A (MITSUBISHI CHEM CORP) 4 December 2008 (2008-12-04)
- DATABASE WPI Week 200117 Thomson Scientific, London, GB; AN 2001-166084 XP002697784, & KR 2000 0040988 A (SK CHEM CO LTD) 15 July 2000 (2000-07-15)
- DE JONG, E. et al.: "Chapter 1. Furandicarboxylic Acid (FDCA) , a Versatile Building Block for a Very Interesting Class of Polymers" In: "Biobased Monomers, Polymers, and Materials", pages ix-x,1-13,
- "The world's next-generation polyester 100% biobased polyethylene furanoate (PEF)", Bioplastics Magazine, 6 August 2012 (2012-08-06), Retrieved from the Internet: URL:http://www.bioplasticsmagazine.com/en/ online-archive/issues2012/201204.php

## Description

### Technical field

The invention relates to a method of making a bottle made of FDCA and diol monomers in such bottle.

### Background art and technical problems

Bottles made of plastics comprise imprints, such as grooves, ribs, gripping elements, indications or others, for technical or visual reasons, for example to provide an improved resistance. Corresponding imprinting members are present on a mold used during a blow molding process, generally implemented for making the bottle, to impart the imprints to the envelop of the bottle.

PolyEthylenTerephthalate (PET) is a polymer generally used for making bottles, typically by the blow molding process. There is a demand for polymers based on renewables, for example that can be efficiently biosourced, to replace PET.

PolyEthylene Furanoate (PEF) is a polymer that can be at least partially biosourced. Document WO 2010/077133 describes, for example, appropriate processes for making a PEF polymer having a 2,5-furandicarboxylate moiety within the polymer backbone. This polymer is prepared by esterification of the 2,5-furandicarboxylate moiety [2,5-Furandicarboxylic acid (FDCA) or dimethyl-2,5-furandicarboxylate (DMF)] and condensation of the ester with a diol or polyol (ethylene glycol, 1,3-propanediol, 1,4-butanediol, 1,4-cyclohexanedimethanol, 1,6-hexanediol, 2,2-dimethyl-1,3-propanediol, poly(ethylene glycol), poly(tetrahydrofuran), glycerol, pentaerythritol). Some of these acid and alcohol moieties can be obtained from renewable crop raw material.

It has been disclosed that some bottles made of PEF have been made. Said bottles are however believed to be quite basic. There is a need for advanced bottles.

The invention aims at addressing at least one of the above problems and/or needs.

### Brief description of the invention

### The bottle

To that end, according to a first aspect, the invention proposes a method according to claim 1.

The thermoplastic polymer made of FDCA and diol monomers, such as polyethylene furanoate (PEF), has been surprisingly found to allow an improved imprinting compared to PET. In particular, the thermoplastic polymer of the invention showed an enhanced ability to follow a profile of an imprinting member of a mold thereby making it possible to get some smaller and more precise features imprinted onto the bottle. Without intending to be bound to any theory, it is believed that due to its flow and regularity features, PET limits the kind of imprints that can be molded, especially for imprints of small dimensions. In particular, it is not possible to have a text imprinted in small characters on PET bottles. PEF surprisingly addresses this.

In embodiments, the invention may comprise one or several of the following features:
- the imprint is selected from the group consisting of splines, grooves, ribs, embossings, decorative patterns, gripping elements, trademark indications, production indications, Braille characters and a combination thereof,
- the imprint has two coplanar edges and an intermediate portion between the two edges, said intermediate portion presenting an apex shifted with respect to the two edges (inwardly for a recessed imprint such as a groove, spline or the like, and outwardly for a protruding imprint such as a rib or the like), the imprint presenting a width (w) measured between the two edges and a maximum height (h) measured between the edges and the apex,
- the imprint comprises a groove of which apex is shifted inwardly with respect to the two edges,
- the width (w) and the maximum height (h) are such that the ratio of the maximum height to the width (h/w) is - in an increasing order of preference - greater than or equal to 0.8; 1.0; 1.2; and preferably comprised between 1.2 and 200; 1.2 and 50; 1.2 and 20,
- the envelop is provided with at least two adjacent imprints spaced apart from one another along an axis according to a pitch (Pi), the pitch (Pi) and the maximum height (h) of the imprint being such that:
   when the maximum height is equal to 2 mm, then the pitch is lower than or equal to 5 mm, preferably 4 mm, more preferably 3 mm, more preferably 2 mm, more preferably 1 mm,
   when the pitch is equal to 5 mm, then the maximum height is greater than or equal to 2 mm, preferably 3 mm, more preferably 4 mm, more preferably 6 mm, more preferably 8 mm,
- the imprint has an imprint profile in a plane transverse to the edges, the imprint profile comprising a plurality of points each having a radius of curvature (Rc^{PEF}), the radius of curvature (Rc^{PEF}) at each point of the imprint profile being lower than 1 mm, preferably lower than 0.7 mm, more preferably lower than 0.5 mm, more preferably lower than 0.3 mm,
- the envelop is cylindrical along an axis and comprises a lateral wall extending along the axis, said at least one imprint comprising at least one circumferential imprint extending at least partly around the axis on the lateral wall,
- the envelop further comprises a bottom extending transversally with respect to the axis, the lateral wall extending from the bottom to a free end,
- said at least one imprint comprises a dome imprint centrally extending on the bottom, said dome imprint presenting a concavity oriented outwardly,
- said at least one imprint comprises at least one radial imprint extending radially with respect to the axis on the bottom,
- the envelop has an internal surface delimiting the housing and an external surface opposite to the internal surface, the imprint consisting in a local deformation of both internal and external surfaces of the envelop between two adjacent portions of the envelop, said local deformation being chosen between a deformation in recess with respect to the two adjacent portions and a deformation in relief with respect to the two adjacent portions,
- the imprint is different from petal bottom of molded plastic bottles notably for carbonated liquids,
- the bottle is filled with a liquid, for example a beverage or a non-food liquid such as a home care product or a personal care product, preferably a beverage,
- the bottle, filled or empty, is closed by a closure, for example a cap.

### The method for manufacturing the bottle

The invention proposes a method of making a bottle as previously defined, comprising the steps of:
- providing a preform made of at least one thermoplastic polymer of at least one FuranDiCarboxylic Acid (FDCA) monomer, preferably 2,5-FuranDiCarboxylic Acid (2,5-FDCA) monomer, and at least one diol monomer, preferably monoethylene glycol (MEG) monomer,
- placing the preform in a mold having a cavity comprising at least one imprinting member,
- blowing the preform in the mold to form the bottle comprising an envelop defining a housing and provided with at least one imprint at a blowing pressure less than 35 bars.

It is mentioned that the method according to the invention can also comprise a further step of filling the bottle with a liquid, for example a beverage or a non-food liquid such as a home care product or a personal care product, preferably a beverage. It is mentioned that the method according to the invention can also comprise a step of closing the bottle, filled or empty, with a closure, for example a cap.

In particular, at the step of providing a preform, the preform comprises a hollow tube extending along an axis and having a closed bottom end and an opened top end, the step of blowing the preform comprising blowing the preform through the opened top end at a blowing pressure less than or equal to 35 bars, preferably 30 bars, more preferably 25 bars, more preferably 20 bars, more preferably 15 bars, more preferably 10 bars.

The ability of the thermoplastic polymer of the invention to follow the profile of the imprinting member of the mold further makes it possible to lower the blowing pressure needed at the blow molding step.

The beverage that can be filled in the bottles can be for example water, for example purified water, spring water, natural mineral water, optionally flavored, optionally carbonated. The beverage can be an alcoholic beverage such as bier. The beverage can be a soda for example a cola beverage, preferably carbonated. The beverage can be a fruit juice, optionally carbonated. The beverage can be vitamin water or an energy drink. The beverage can be a milk based product such as milk or drinking dairy fermented products such as yogurt.

### The polymer constituting the bottle: structure-preparation

The polymer comprises moieties corresponding to a FDCA monomer, preferably 2,5-FDCA, and moieties corresponding to a diol monomer, preferably a monoethylene glycol. The polymer is typically obtained by polymerizing monomers providing such moieties in the polymer. To that end one can use as monomers FDCA, preferably 2,5-FDCA or a diester thereof. Thus the polymerization can be an esterification or a transesterification, both being also referred to as (poly)condensation reactions. One preferably uses dimethyl-2,5-furandicarboxylate (DMF) as a monomer.

The 2,5-FDCA moiety or monomer can be obtained from a 2,5-furandicarboxylate ester is an ester of a volatile alcohol or phenol or ethylene glycol, preferably having a boiling point of less than 150°C, more preferably having a boiling point of less than 100°C, still more preferably diester of methanol or ethanol, most preferably of methanol. 2,5-FDCA or DMF are typically considered as biosourced.

The 2,5-FDCA or ester thereof may be used in combination with one or more other dicarboxylic acid, esters or lactones.

The diol monomer can be an aromatic, aliphatic or cycloaliphatic diol. Examples of suitable diol and polyol monomers therefore include ethylene glycol, diethylene glycol, 1,2-propanediol, 1,3-propanediol, 1,4-butanediol, 1,5-pentanediol, 1,6-hexanediol, 1,4-cyclohexanedimethanol, 1,1,3,3-tetramethylcyclobutanediol, 1,4-benzenedimethanol, 2,2-dimethyl-1,3-propanediol, polyethylene glycol), poly(tetrahydofuran), 2,5-di(hydroxymethyl)tetrahydrofuran, isosorbide, glycerol, 25 pentaerythritol, sorbitol, mannitol, erythritol, threitol. Ethylene glycol, 1,3-propanediol, 1,4-butanediol, 1,4-cyclohexanedimethanol, 1,6-hexanediol, 2,2-dimethyl-1,3-propanediol,poly(ethylene glycol), poly(tetrahydofuran), glycerol, and pentaerythritol, are particularly preferred diols.

In the preferred embodiment the diol is Ethylene Glycol (MonoEthylene Glycol - MEG), preferably biosourced. For example biosourced MEG can be obtained from ethanol which can also be prepared by fermentation from sugars, (e.g. glucose, fructose, xylose) that can be obtained from crop or agricultural by-products, forestry byproducts or solid municipal waste by hydrolysis of starch, cellulose, or hemicellulose. Alternatively, biosourced MEG can be obtained from glycerol, that itself can be obtained as waste from biodiesel.

The thermoplastic polymer, which is the raw material of the bottle made according to the invention, can also comprise other diacid monomers, such as dicarboxylic acid or polycarboxylic acid, for instance therephthalic acid, isophtahalic acid, cyclohexane dicarboxylic acid, maleic acid, succinic acid, 1,3,5-benzenetricarboxylic acid. Lactones can also be used in combination with the 2,5-furandicarboxylate ester: Pivalolactone, eppilon-caprolactone and lactides (L,L; D,D; D,L). Even if it is not the most preferred embodiment of the invention, the polymer can be non linear, branched, thanks to the use of polyfunctional monomers (more than 2 acid or hydroxyl functions per molecule), either acid and/or hydroxylic monomers, e.g polyfunctional aromatic, aliphatic or cycloaliphatic polyols, or polyacids.

According to a preferred embodiment of the invention, the polymer is a PEF material using biosourced 2,5-FDCA and biosourced MonoEthylene Glycol. Indeed, 2,5-FDCA comes from 5-hydroxymethylfurfural (5-HMF) which is produced from glucose or fructose (obtained from renewable ressources). MonoEthylene Glycol can be obtained from ethanol which can also be prepared by fermentation from sugars, (e.g. glucose, fructose, xylose) that can be obtained from crop or agricultural by-products, forestry by-products or solid municipal waste by hydrolysis of starch, cellulose, or hemicellulose. Alternatively, MonoEthylene Glycol can be obtained from glycerol, that itself can be obtained as waste from biodiesel.

This is referred to as a 100% biobased or biosourced PEF as most of the monomers used are considered as biosourced. As some co-monomers and/or some additives, and/or some impurities and/or some atoms might not be biosourced, the actual amount of biosourced material can be lower than 100%, for example between 75% and 99% by weight, preferably from 85 to 95%. PEF can be prepared according to the public state of the art in making PEF, for example as described in document WO 2010/077133. Bottles are made with such a material for example by Injection Blow Molding (IBM) processes, preferably by Injection Stretch Blow Molding (ISBM) processes. Such bottle can have similar properties than previously publicly described with PEF wherein 2,5-FDCA or MonoEthylene Glycol are not biosourced. Such properties, including mechanical properties can be improved compared to PET.

The term "polymer" according to the present invention encompasses homopolymers and copolymers, such as random or block copolymers.

The polymer has a number average molecular weight (Mn) of at least 10,000 Daltons (as determined by GPC based on polystyrene standards). Mn of the polymer is preferably comprised between - in daltons and an increasing order of preference - 10000 and 100000; 15000 and 90000; 20000 and 80000; 25000 and 70000; 28000 and 60000.

According to a remarkable feature of the invention, the polymer polydispersity index (PDI) = Mw/Mn (Mw = weight average molecular weight), is defined as follows - in an increasing order of preference -: 1 < PDI ≤ 5; 1.1 ≤ PDI ≤ 4; 1.2 ≤ PDI ≤ 3; 1.3 ≤ PDI ≤ 2.5; 1.4 ≤ PDI ≤ 2.6; 1.5 ≤ PDI ≤ 2.5; 1.6 ≤ PDI ≤ 2.3.

Generally, the process for preparing the polymer comprises the following steps: (trans)esterification of the 2,5-FDCA dimethyl ester, of the 2,5-FDCA diglycerylester; (poly)condensation reaction in the presence of a tin(IV) based catalyst and possibly a purification step. The process for preparing PEF can comprise a Solid State Polymerization (SSP) step.

### Detailed description of the invention

Further objects and advantages of the invention will emerge from the following disclosure of a particular embodiment of the invention given as a non limitative example, the disclosure being made in reference to the enclosed drawings in which:
- Figure 1 is a side view of a bottle comprising an envelop provided with grooves made according to an embodiment of the invention,
- Figure 2 is an enlarged view of the detail referenced D on Figure 1 representing of one of the grooves of the bottle,
- Figure 3 is an enlarged view of the detail referenced D on Figure 1 representing a variant of one of the grooves of the bottle,
- Figure 4 is a bottom view of the bottle of Figure 1,
- Figure 5 is a side view of a preform used in a blow molding process for making the bottle of Figure 1,
- Figure 6 is a schematic view of an experimental set-up to obtain a groove profile of one of the grooves of the bottle,
- Figures 7a, 7b and 7c are respective representations of the groove profiles of the grooves referenced R1, R2 and R3 on Figure 1 obtained by the experimental set-up of Figure 6, the groove profiles being superposed on groove profiles of corresponding grooves of a reference bottle identical to the bottle of Figure 1 except that the reference bottle is made of PET.

On the Figures, the same reference numbers refer to the same or similar elements.

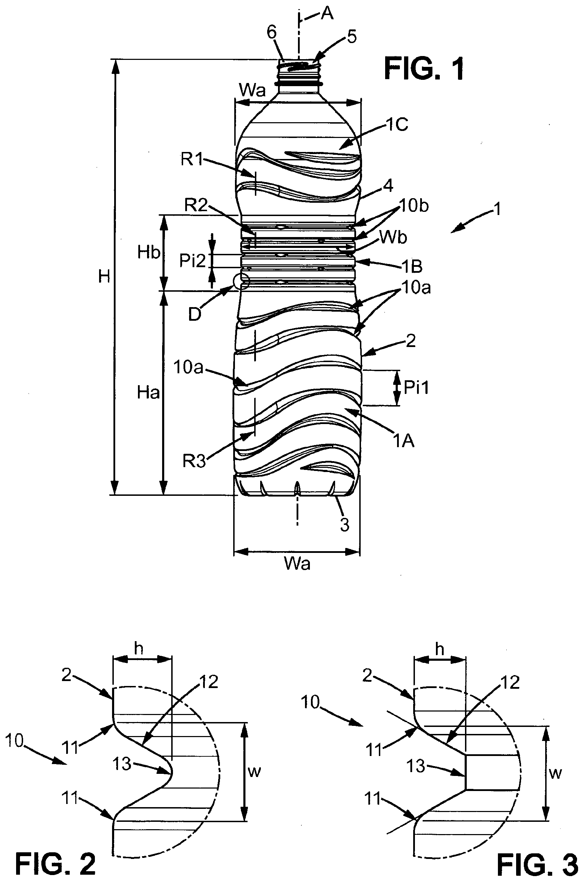

Figure 1 represents a bottle 1 suitable for containing for example a liquid such as water. The bottle 1 is cylindrical along an axis A, of circular cross section, and comprises an envelop 2. The envelop 2 comprises a bottom 3 perpendicular to the axis A, and a lateral wall 4 extending from the bottom 3 along the axis A. At a free end, opposite to the bottom 3, the lateral wall 4 forms a neck 5 narrowing towards the axis A. The bottom 3 and the lateral wall 4 both have internal surfaces delimiting a housing, and external surfaces opposite to the internal surfaces. In the following of the description, the terms "inside", "inwards", "inwardly" and similar will refer to an element situated close to or directed towards the housing or the axis, and the terms "outside", "outwards", "outwardly" and similar will refer to an element situated apart from or directed opposite to the housing or the axis.

As a non-limitative example, the bottle 1 may have a height H measured along the axis A of 317.75 mm. The lateral wall 4 may present a curved contour along the axis A defining an intermediate narrow portion 1B, which may have a maximum width Wb measured perpendicularly to the axis A of 80 mm, between two large portions 1A, 1C, which each may have a maximum width Wa of 89 mm. A first 1A of the large portions, close to the bottom 3, may have a height Ha of 148 mm and the intermediate narrow portion 1B may have a height Hb of 56 mm. The neck 5 may have a frustoconical portion attached to a second 1C of the large portions, apart from the bottom 3, and a cylindrical portion. The cylindrical portion of the neck 5 is provided with a thread 6 on the external surface to enable a cap to be screwed onto the neck 5 for closing the bottle 1.

As can be seen on Figures 1 to 4, the envelop 2 is provided with imprints each consisting in a local deformation of both internal and external surfaces of the envelop 2 between two adjacent portions of the envelop 2.

In the illustrated bottle, the imprints comprise a plurality of adjacent circumferential grooves 10a, 10b extending at least partly around the axis A on the lateral wall 4. In particular, each circumferential groove 10b of the intermediate narrow portion 1B is annular and extends circumferentially substantially in a plan perpendicular to the axis A, whereas each circumferential groove 10a of the large portions 1A, 1C is annular and undulates circumferentially with respect to a plan perpendicular to the axis A. The circumferential grooves 10a, 10b are regularly arranged on each portion of the lateral wall 4 according to a pitch Pi along the axis A. Two adjacent circumferential grooves 10a of the large portions 1A, 1C are therefore separated from each other of a distance measured along the axis A corresponding to a first pitch Pi1. Two adjacent circumferential grooves 10b of the intermediate narrow portion 1B are separated from each other of a distance measured along the axis A corresponding to a second pitch Pi2.

In particular, as can be seen on figure 2, each circumferential groove 10a, 10b consists in a local deformation in recess with respect to the two adjacent portions of the envelop 2. Each circumferential groove 10a, 10b has then two coplanar edges 11, i.e. substantially arranged in a plane parallel to the axis A of the bottle 1, and an intermediate portion 12 between the two edges 11. The intermediate portion 12 of each groove presents a curved apex 13 shifted inwardly, i.e. towards the axis A, with respect to the two edges 11. In a variant shown on Figure 3, the apex 13 may be flat. Each circumferential groove 10 presents a width w measured between the two edges 11 and a maximum height h measured between the edges 11 and the apex 13.

As a non-limitative example, the width w and the maximum height h may be such that the ratio h/w of the maximum height to the width is - in an increasing order of preference - greater than or equal to 0.8; 1.0; 1.2; and preferably comprised between 1.2 and 200; 1.2 and 50; 1.2 and 20.

Besides, the pitch Pi and the maximum height h of the circumferential groove may be such that:
- when the maximum height is equal to 2 mm, then the pitch is lower than or equal to, in an increasing order of preference, 5 mm, 4 mm, 3 mm, 2 mm or 1 mm,
- when the pitch is equal to 5 mm, then the maximum height is greater than or equal to, in an increasing order of preference, 2 mm, 3 mm, 4 mm, 6 mm or 8 mm.

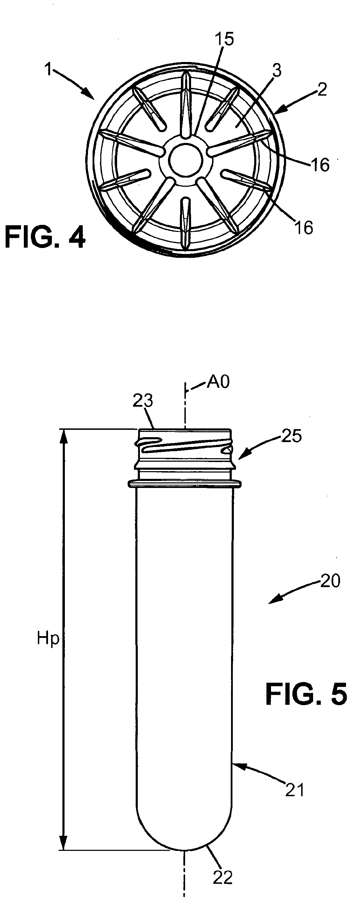

As can be seen on Figure 4, on the bottom 3, the imprints also comprise a central dome imprint 15 and radial grooves 16 extending radially with respect to the axis A. The dome imprint 15 extends inwardly from an annular edge to an apex arranged on the axis A. The dome imprint 15 thereby presents a concavity oriented outwardly. As for the circumferential grooves 10a, 10b, each radial groove 16 curves inwardly from two coplanar edges.

Although the invention has been disclosed with a cylindrical bottle comprising several grooves as imprints, the invention is not limited thereto. In particular, the bottle could be of any other suitable shape, such as cylindrical of elliptic, polygonal or other cross-section. Besides, the envelop could be provided with one or several imprints consisting in a local deformation in recess, as previously disclosed in relation with grooves, or in a local deformation in relief, i.e. protruding, with respect to the two adjacent portions. In the later case, the intermediate portion of such imprint presents an apex shifted outwardly, i.e. opposite to the axis A, with respect to the two edges. Thus, the imprint could be of any kind, especially selected from the group consisting of splines, grooves, ribs, embossings, decorative patterns, gripping elements, trademark indications, production indications, Braille characters and a combination thereof.

The bottle 1 is molded, by a blow molding process, from a plastic material chosen in accordance with the content with which the bottle is intended to be filled. In particular, the plastic material is preferably at least partly biosourced and the bottle is filled with a liquid, such as water or another beverage, before a cap is screwed and sealed to the neck 5.

According to the invention, the above described bottle 1 is made of a thermoplastic polymer of at least one FuranDiCarboxylic Acid (FDCA) monomer and at least one diol monomer. In particular, the thermoplastic polymer is a PolyEthyleneFuranoate (PEF) based on biobased 2,5-FDCA and biobased MonoEthyleneGlycol (MEG). The preparation of the polymer and the manufacture of the bottle are detailed below in the following example.

### Example

### Materials

- 2,5-furandicarboxylic acid (2,5-FDCA) and dimethyl-2,5-furandicarboxylate (DMF) for example prepared according to WO 2011/043660.
- MEG: biosourced MEG, as diol.
- PET (comparative): PET w170 supplied by Indorama, with the following features:
   - glass transition temperature, Tg = 75°C,
   - melting temperature, Tf = 235°C,
   - density (amorphous), d = 1.33.

### Preparation of the PEF polymer

Polymerizations are carried out in a 15 L stirred batch reactor. Dimethyl 2,5-furandicarboxylate (5.0 kg; 27.17 mol), bio-Ethylene glycol (4.02 kg; 64.83 mol) and Ca acetate monohydrate (8.48 g; 10.4 mmol) are mixed under nitrogen in the predried reactor, while heating to a temperature of 130°C when the methanol starts to distill off. The temperature is kept at about 130°C till most of the methanol is distilled out. Subsequently, the temperature is raised to 190°C (mantle temperature) under nitrogen flush for 2 hours. Then Sb glycolate (3.48 g Sb₂O₃)dissolved in 200 mL bioethylene glycol was added under stirring at 40 rpm. The temperature is increased to 210°C while vacuum is applied slowly. At 300 mbar most of the ethylene glycol is distilled off. Finally the vacuum is reduced as much as possible, but definitely below 1 mbar. The mantle temperature is raise to 240°C and the molecular weight increase was monitored by measuring the stirrer torque. The polymer that is obtained from the reactor is shown to have a Mn of 16000 g/mol. And a Mw/Mn of 2.5. Solid state polymerization is performed in a tumble dryer. During the first 12 hours, crystallization of the polymer is performed at 145°C. Subsequently, during a period of 72 hours, the temperature is slowly raised to above 200°C. Care is taken that polymer particles do not stick together. After 72 hours, the polymer has:
- number average molecular weight measured by GPC, Mn = 30000,
- glass transition temperature, Tg = 85°C,
- melting temperature, Tf = 210°C,
- density (amorphous), d = 1.42,
- polydispersity index, Mw/Mn PDI = 2.1.

GPC measurements are performed on a Merck-Hitachi LaChrom HPLC system equipped with two PLgel 10 mm MIXED-C (300 x 7.5 mm) columns. Chloroform:2-chlorophenol 7:3 solvent mixture was used as eluent. Calculation of the molecular weight was based on polystyrene standards and carried out by Cirrus^{™} PL DataStream software. UV-visible spectra and absorbances were recorded on a Helios (ThermoSPectronic= spectrophotometer.

### Manufacturing method of the bottle

The bottle is manufactured by a blow molding process implementing a mold, such as a Sidel SBO 1 machine, having a cavity comprising one or several imprinting members, and a blowing device adapted to supply the cavity with a fluid at a blowing pressure. Each imprinting member has two coplanar edges and an intermediate portion, between the two edges, conformed to form the desired imprint on the envelop 2 of the bottle 1. In particular, the intermediate portion of each imprinting member has an apex shifted with respect to the two edges. In the illustrated embodiment, for forming grooves on the envelop 2 of the bottles 1, the intermediate portion is in relief with respect to the two edges and presents an apex, preferably flat, shifted inwardly (as regards to the cavity, i.e. towards a central axis of the cavity) with respect to the two edges. For example, the imprinting members have a width w=2.5 mm between the two coplanar edges and a height h=6.5 mm between the edges and the apex.

The blow molding process implements a 30 g preform 20 made of the suitable thermoplastic polymer, such as the thermoplastic polymer PEF, the preparation of which has been hereinabove described. As can be seen on Figure 5, the preform 20 comprises a hollow tube 21 extending along an axis A0 and having a closed bottom end 22 and an opened top end 23. A top portion 25 of the preform 20 close to the opened top end 23 is conformed as the neck 5 of the bottle 1. The remaining portion of the tube 21 is cylindrical of circular cross-section with a diameter substantially equal to that of the top portion 25.

As a non-limitative example, the preform 20 may have a height Hp measured along the axis A0 of 121 mm and an internal diameter varying from 21 mm close to the closed bottom end 22 to 25 mm close to the opened top end 23.

To manufacture 30 g preforms 20 of the above disclosed type, a 20 kg sample of the above disclosed thermoplastic polymer PEF is used in a Netstal Elion 800 injection molding machine. The matter was heated to 250°C, with a cycle time of 19.92 s. The PEF preforms 20 where heated to a surface temperature of 120°C. After the preforms 20 have been placed in the mold at a cold temperature (10°C-13°C), the preforms 20 can be blown through injection of the fluid at the blowing pressure within the preform through the opened top end 23. Thanks to the use of the thermoplastic polymer PEF, the blowing pressure is lowered to less than 35 bars, and especially, in an increasing order of preference, to 30 bars, 25 bars, 20 bars, 15 bars or 10 bars. In particular, the preforms 20 were blown with a blowing pressure of 34 bars to bottles 1 of the above disclosed type, namely a 1.5 L type with a design typical of still water, presenting grooves.

Preforms of similar shape were made with PET w170 from Indorama at a 30 g weight for comparison with the thermoplastic polymer PEF. The matter was heated to 265°C, with a cycle time of 20.04 s. The PET preforms were heated to a surface temperature of 108°C-110°C, placed in the mold at cold temperature (10°C-13°C) and blown, at a blowing pressure greater than 35 bars, to the same 1.5 L type bottles with a design typical of still water, presenting grooves, hereafter referred to as reference bottles. Good material distribution was achieved in all cases.

The so produced bottles are identical to the above described bottle 1.

### Tests and results

In order to assess the surprising moldability improvement brought by the PEF versus PET, some tests are carried out.

The grooves of each bottle have each an imprint profile, here a groove profile, in a plane transverse to the edges, such as a plane parallel to a longitudinal median plane containing the axis A. The groove profile is composed of a plurality of points each having a radius of curvature.

A comparison of groove profiles of the grooves of a test bottle 1 molded from PEF and of the grooves of a reference bottle molded from PET is made. As explained above, the PEF test bottle 1 and the PET reference bottle have been molded by a same mold having the same imprinting members. Therefore, each imprinting member may form corresponding grooves on the PEF test bottle 1 and on the PET reference bottle.

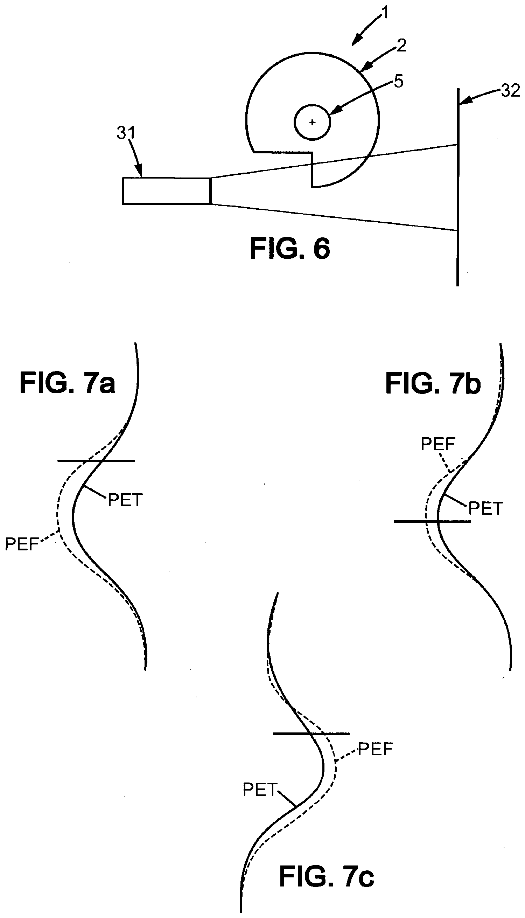

For the comparison, the groove profiles, and especially the radius of curvature at each point of the groove profiles, are measured according to a protocol described below implementing an experimental set-up 30 shown on figure 6.

At first, magnified projections of the groove profiles of the corresponding imprints of the PEF test and PET reference bottles are obtained.

As shown on figure 6, these magnified projections are made using a profile projector 31 that is a device projecting a magnified profile image of an area or feature of a workpiece onto a screen 32. Here, the profile projector 31 and the screen 32 were used for measuring the groove profiles of the bottles. They could, however, be used for measuring any other structural and/or ornamental feature imprinted on the bottles. The measurements were made using a Deltronic DH350.

Marks are given to the PEF test and PET reference bottles to differentiate them, and their orientation regarding to the mold is checked. The positions of the grooves to be measured are precisely identified. In particular, in the illustrated embodiment, the grooves identified, on Figure 1, R1 (on the second large portion 1C), R2 (on the intermediate portion 1B) and R3 (on the first large portion 1A) are measured for the PEF test bottle 1 and the PET reference bottle.

The PEF test and PET reference bottles are cut along a transverse joint plan using a cutter with a blade oriented orthogonally to the envelop and moved from the outside to the inside, to avoid creating any defect on the external surface that would alter the quality of the groove profile measurement. A part of the PEF test and PET reference bottles corresponding to a sector of about 90° is removed to allow the measurement.

The measurement of the groove profile of each groove is made using an appropriate magnification so that the groove is displayed on the whole screen 32. For example, the magnification is at least 10 fold.

The PEF test bottle 1 is placed on a measuring table and its stability is checked. The PEF test bottle 1 is oriented with respect to the profile projector 31 so that the plan that was cut is orthogonal to an incident light beam emitted by the profile projector 31. The groove R1 of the test PEF bottle 1 is measured by vertical translation of the object. A focusing of an image on the screen 32 representing the magnified imprint profile of the groove R1 is ensured. When the image is sharp, a transparent sheet is fixed on the screen 32, and held in place. The image projected on the screen 32 is drawn by hand, and identified precisely. The magnified groove profiles of the other grooves R2 and R3 of the PEF test bottle 1 are successively drawn the same way.

The magnified groove profiles of the corresponding grooves R1, R2 and R3 of the PET reference bottle are successively drawn the same way. Also for the mold, a similar measurement is made, done using the reflection of a light shone on the insert mold.

Secondly, the images of the magnified groove profiles of the corresponding grooves of the PEF test and PET reference bottles are superposed for comparison of groove profiles and determination of a quality of the imprinting. Especially:
- Figure 7a represents the superposed images of the magnified groove profiles of the corresponding grooves R1 of the PEF test and PET reference bottles,
- Figure 7b represents the superposed images of the magnified groove profiles of the corresponding grooves R2 of the PEF test and PET reference bottles,
- Figure 7c represents the superposed images of the magnified groove profiles of the corresponding grooves R3 of the PEF test and PET reference bottles.

From the superposed images of each corresponding groove, pairs of corresponding points can be defined. For example, each pair of corresponding points comprise one point of the magnified projection of one of the groove profile of the PEF test bottle 1 and one point of the magnified projection of the corresponding groove profile of the PET reference bottle arranged on a same line perpendicular to the axis of the bottles.

Then, to determine the quality of the imprinting, the radii of curvature of each pair of corresponding points of the magnified projections of the groove profiles are measured. Therefore, for each pair of corresponding points, the radius of curvature Rc^{PEF} of the groove profile of the groove of the PEF test bottle 1 and the radius of curvature Rc^{PET} of the groove profile of the corresponding groove of the PET reference bottle are measured.

As can be seen on Figures 7a to 7c, the radius of curvature Rc^{PEF} of the groove profile of the PEF test bottle 1 at each point is able to reach lower values than the radius of curvature Rc^{PET} of the corresponding point of the groove profile of the PET reference bottle. For example, the radius of curvature Rc^{PEF} at each point of the groove profile of the PEF test bottle 1 can be lower than 1 mm, preferably lower than 0.7 mm, more preferably lower than 0.5 mm, more preferably lower than 0.3 mm.

Therefore, the profile of the grooves born by the PEF test bottle can precisely follow a contour of the imprinting members of the mold, whereas that of the PET reference bottle systematically display a less accurate imprinting.

## Claims

1. A method of making a bottle (1) comprising the steps of:
- providing a preform (20) made of at least one thermoplastic polymer of at least one FuranDiCarboxylic Acid (FDCA) monomer, preferably 2,5-FuranDiCarboxylic Acid (2,5-FDCA) monomer, and at least one diol monomer, preferably monoethylene glycol (MEG) monomer,
- placing the preform (20) in a mold having a cavity comprising at least one imprinting member, the preform comprises a hollow tube (21) extending along an axis (A0) and having a closed bottom end (22) and an opened top end (23),
- blowing the preform (20) in the mold to form the bottle (1) comprising an envelop (2) defining a housing and provided with at least one imprint (10a, 10b, 15, 16), the preform (20) being blown through the opened top end (23) at a blowing pressure less than 35 bars, preferably 30 bars, more preferably 25 bars, more preferably 20 bars, more preferably 15 bars, more preferably 10 bars.

2. A method according to claim 1, further comprising a step of filling the bottle with a liquid, preferably a beverage.

3. A method according to any of claims 1 and 2, wherein the imprint is selected from the group consisting of splines, grooves, ribs, embossings, decorative patterns, gripping elements, trademark indications, production indications, Braille characters and a combination thereof.

4. A method according to any of claims 1 to 3, wherein the imprint (10a, 10b) has two coplanar edges (11) and an intermediate portion (12) between the two edges (11), said intermediate portion (12) presenting an apex (13) shifted with respect to the two edges (11), the imprint (10a, 10b) presenting a width (w) measured between the two edges (11) and a maximum height (h) measured between the edges (11) and the apex (13).

5. A method according to claim 4, wherein the imprint comprises a groove (10a, 10b) of which apex (13) is shifted inwardly with respect to the two edges (11).

6. A method according to any of claims 4 and 5, wherein the width (w) and the maximum height (h) are such that the ratio of the maximum height to the width (h/w) is - in an increasing order of preference - greater than or equal to 0.8, 1.0; 1.2; and preferably comprised between 1.2 and 200; 1.2 and 50; 1.2 and 20.

7. A method according to any of claims 4 to 6, wherein the envelop (2) is provided with at least two adjacent imprints (10a, 10b) spaced apart from one another along an axis (A) according to a pitch (Pi), the pitch (Pi) and the maximum height (h) of the imprint (10a, 10b) being such that:
- when the maximum height (h) is equal to 2 mm, then the pitch (Pi) is lower than or equal to 5 mm, preferably 4 mm, more preferably 3 mm, more preferably 2 mm, more preferably 1 mm,
- when the pitch (Pi) is equal to 5 mm, then the maximum height (h) is greater than or equal to 2 mm, preferably 3 mm, more preferably 4 mm, more preferably 6 mm, more preferably 8 mm.

8. A method according to any of claims 4 to 7, wherein the imprint has an imprint profile in a plane transverse to the edges (11), the imprint profile comprising a plurality of points each having a radius of curvature (Rc^{PEF}), the radius of curvature (Rc^{PEF}) at each point of the imprint profile being lower than 1 mm, preferably lower than 0.7 mm, more preferably lower than 0.5 mm, more preferably lower than 0.3 mm.

9. A method according to any of claims 1 to 8, wherein the envelop (2) is cylindrical along an axis (A) and comprises a lateral wall (4) extending along the axis (A), said at least one imprint comprising at least one circumferential imprint (10a, 10b) extending at least partly around the axis on the lateral wall (4).

10. A method according to claim 9, wherein the envelop (2) further comprises a bottom (3) extending transversally with respect to the axis (A), the lateral wall (4) extending from the bottom (3) to a free end.

11. A method according to claim 10, wherein said at least one imprint comprises a dome imprint (15) centrally extending on the bottom (3), said dome imprint (15) presenting a concavity oriented outwardly.

12. A method according to claim 10 or 11, wherein said at least one imprint comprises at least one radial imprint (16) extending radially with respect to the axis (A) on the bottom (3).

13. A method according to any of claims 1 to 12, wherein the envelop (2) has an internal surface delimiting the housing and an external surface opposite to the internal surface, the imprint consisting in a local deformation of both internal and external surfaces of the envelop (2) between two adjacent portions of the envelop, said local deformation being chosen between a deformation in recess with respect to the two adjacent portions and a deformation in relief with respect to the two adjacent portions.

## Patentansprüche

1. Verfahren zur Herstellung einer Flasche (1), umfassend die Schritte:
- Bereitstellen einer Vorform (20) aus mindestens einem thermoplastischen Polymer aus mindestens einem FuranDiCarbonsäure (FDCA)-Monomer, bevorzugt 2,5-FuranDiCarbonsäure (2,5-FDCA)-Monomer, und mindestens einem Diol-Monomer, bevorzugt Monoethylenglykol (MEG)-Monomer,
- Platzieren der Vorform (20) in eine Form mit einem Hohlraum, der mindestens ein Prägungselement umfasst, wobei die Vorform ein Hohlrohr (21) umfasst, das sich entlang einer Achse (A0) erstreckt und ein geschlossenes unteres Ende (22) und ein offenes oberes Ende (23) aufweist,
- Blasen der Vorform (20) in der Form, um die Flasche (1) zu bilden, die eine ein Gehäuse definierende Ummantelung (2) umfasst und mit mindestens einer Prägung (10a, 10b, 15, 16) versehen ist, wobei die Vorform (20) durch das offene obere Ende (23) mit einem Blasformdruck von weniger als oder gleich 35 bar, bevorzugt 30 bar, stärker bevorzugt 25 bar, stärker bevorzugt 20 bar, stärker bevorzugt 15 bar, stärker bevorzugt 10 bar geblasen wird.

2. Verfahren nach Anspruch 1, weiter umfassend einen Schritt des Befüllens der Flasche mit einer Flüssigkeit, vorzugsweise einem Getränk.

3. Verfahren nach einem der Ansprüche 1 und 2, wobei die Prägung ausgewählt ist aus der Gruppe bestehend aus Keilen, Rillen, Rippen, Einprägungen, dekorativen Mustern, Greifelementen, Angaben zum Warenzeichen, Angaben zur Produktion, Braille-Zeichen und einer Kombination davon.

4. Verfahren nach einem der Ansprüche 1 bis 3, wobei die Prägung (10a, 10b) zwei koplanare Ränder (11) und einen Zwischenabschnitt (12) zwischen den beiden Rändern (11) aufweist, wobei der Zwischenabschnitt (12) einen Scheitel (13) aufweist, der in Bezug auf die beiden Ränder (11) verschoben ist, wobei die Prägung (10a, 10b) eine zwischen den beiden Rändern (11) gemessene Breite (w) und eine zwischen den Rändern (11) und dem Scheitel (13) gemessene maximale Höhe (h) aufweist.

5. Verfahren nach Anspruch 4, wobei die Prägung eine Rille (10a, 10b) umfasst, deren Scheitel (13) in Bezug auf die beiden Ränder (11) nach innen verschoben ist.

6. Verfahren nach einem der Ansprüche 4 und 5, wobei die Breite (w) und die maximale Höhe (h) derart sind, dass das Verhältnis der maximalen Höhe zu der Breite (h/w) - nach steigender Präferenz geordnet - größer als oder gleich 0,8; 1,0; 1,2 ist; und bevorzugt im Bereich zwischen 1,2 und 200; 1,2 und 50; 1,2 und 20 liegt.

7. Verfahren nach einem der Ansprüche 4 bis 6, wobei die Ummantelung (2) mit mindestens zwei benachbarten Prägungen (10a, 10b) versehen ist, die voneinander entlang einer Achse (A) entsprechend einem Abstand (engl.: pitch; Pi) beabstandet sind, wobei der Abstand (Pi) und die maximale Höhe (h) der Prägung (10a, 10b) derart sind, dass:
- der Abstand (Pi) kleiner als oder gleich 5 mm, bevorzugt 4 mm, stärker bevorzugt 3 mm, stärker bevorzugt 2 mm, stärker bevorzugt 1 mm ist, wenn die maximale Höhe (h) gleich 2 mm ist;
- die maximale Höhe (h) größer als oder gleich 2 mm, bevorzugt 3 mm, stärker bevorzugt 4 mm, stärker bevorzugt 6 mm, stärker bevorzugt 8 mm ist, wenn der Abstand (Pi) gleich 5 mm ist.

8. Verfahren nach einem der Ansprüche 4 bis 7, wobei die Prägung ein Prägungsprofil in einer zu den Rändern (11) transversalen Ebene aufweist, wobei das Prägungsprofil eine Vielzahl von Punkten mit jeweils einem Krümmungsradius (Rc^{PEF}) umfasst, wobei der Krümmungsradius (Rc^{PEF}) an jedem Punkt des Prägungsprofils kleiner als 1 mm, bevorzugt kleiner als 0,7 mm, stärker bevorzugt kleiner als 0,5 mm, stärker bevorzugt kleiner als 0,3 mm ist.

9. Verfahren nach einem der Ansprüche 1 bis 8, wobei die Ummantelung (2) entlang einer Achse (A) zylindrisch ist und eine sich entlang der Achse (A) erstreckende laterale Wand (4) umfasst, wobei die mindestens eine Prägung mindestens eine umlaufende Prägung (10a, 10b) umfasst, die sich mindestens teilweise um die Achse auf der lateralen Wand (4) erstreckt.

10. Verfahren nach Anspruch 9, wobei die Ummantelung (2) weiter einen Boden (3) umfasst, der sich transversal in Bezug auf die Achse (A) erstreckt, wobei die laterale Wand (4) sich von dem Boden (3) zu einem freien Ende erstreckt.

11. Verfahren nach Anspruch 10, wobei die mindestens eine Prägung eine Wölbungsprägung (15) umfasst, die sich zentral auf dem Boden (3) erstreckt, wobei die Wölbungsprägung (15) eine auswärts gerichtete Konkavität aufweist.

12. Verfahren nach Anspruch 10 oder 11, wobei die mindestens eine Prägung mindestens eine radiale Prägung (16) umfasst, die sich radial in Bezug auf die Achse (A) auf dem Boden (3) erstreckt.

13. Verfahren nach einem der Ansprüche 1 bis 12, wobei die Ummantelung (2) eine innere Fläche aufweist, die das Gehäuse abgrenzt und eine gegenüber der inneren Fläche liegende äußere Fläche, wobei die Prägung aus einer lokalen Verformung sowohl der inneren als auch der äußeren Fläche der Ummantelung (2) zwischen zwei benachbarten Abschnitten der Ummantelung besteht, wobei die lokale Verformung aus einer Verformung in Aussparung in Bezug auf die beiden benachbarten Abschnitte und einer Verformung in Erhöhung in Bezug auf die beiden benachbarten Abschnitte ausgewählt ist.

## Revendications

1. Procédé de fabrication d'une bouteille (1) comprenant les étapes de :
- fourniture d'un préformé (20) fait d'au moins un polymère thermoplastique d'au moins un monomère acide furandicarboxylique (FDCA), de préférence un monomère acide 2,5-furandicarboxylique (2,5-FDCA), et d'au moins un monomère diol, de préférence un monomère monoéthylène glycol (MEG),
- placement du préformé (20) dans un moule ayant une cavité comprenant au moins un élément de formation d'empreinte, le préformé comprenant un tuyau creux (21) s'étendant le long d'un axe (A0) et ayant une extrémité de fond fermée (22) et une extrémité de sommet ouverte (23)
- soufflage du préformé (20) dans le moule pour former la bouteille (1) comprenant une enveloppe (2) définissant un logement et dotée d'au moins une empreinte (10a, 10b, 15, 16), le préformé (20) étant soufflé par l'extrémité de sommet ouverte (23) sous une pression de soufflage inférieure ou égale à 35 bars, de préférence à 30 bars, mieux encore à 25 bars, mieux encore à 20 bars, mieux encore à 15 bars, mieux encore à 10 bars.

2. Procédé selon la revendication 1, comprenant en outre une étape de remplissage de la bouteille avec un liquide, de préférence une boisson.

3. Procédé selon la revendication 1 ou 2, dans lequel l'empreinte est choisie dans le groupe constitué de cannelures, de rainures, de nervures, de bosses, de motifs décoratifs, d'éléments de préhension, d'indications de marque, d'indications de production, de caractère en Braille et d'une combinaison de ceux-ci.

4. Procédé selon l'une quelconque des revendications 1 à 3, dans lequel l'empreinte (10a, 10b) a deux bords coplanaires (11) et une partie intermédiaire (12) entre les deux bords (11), ladite partie intermédiaire (12) présentant un sommet (13) décalé par rapport aux deux bords (11), l'empreinte (10a, 10b) présentant une largeur (w) mesurée entre les deux bords (11) et une hauteur maximale (h) mesurée entre les bords (11) et le sommet (13).

5. Procédé (1) selon la revendication 4, dans lequel l'empreinte comprend une rainure (10a, 10b) dont le sommet (13) est décalé vers l'intérieur par rapport aux deux bords (11).

6. Procédé (1) selon l'une quelconque des revendications 4 et 5, dans lequel la largeur (w) et la hauteur maximale (h) sont telles que le rapport de la hauteur maximale à la largeur (h/w) est - dans un ordre croissant de préférence - supérieur ou égal à 0,8 ; 1,0 ; 1,2 et de préférence compris entre 1,2 et 200 ; 1,2 et 50 ; 1,2 et 20.

7. Procédé (1) selon l'une quelconque des revendications 4 à 6, dans lequel l'enveloppe (2) est dotée d'au moins deux empreintes adjacentes (10a, 10b) espacées l'une de l'autre le long d'un axe (A) selon un écartement (Pi), l'écartement (Pi) et la hauteur maximale (h) de l'empreinte (10a, 10b) étant tels que :
- lorsque la hauteur maximale (h) est égale à 2 mm, alors l'écartement (Pi) est inférieur ou égal à 5 mm, de préférence à 4 mm, mieux encore à 3 mm, mieux encore à 2 mm, mieux encore à 1 mm,
- lorsque l'écartement (Pi) est égal à 5 mm, alors la hauteur maximale (h) est supérieure ou égale à 2 mm, de préférence à 3 mm, mieux encore à 4 mm, mieux encore à 6 mm, mieux encore à 8 mm.

8. Procédé (1) selon l'une quelconque des revendications 4 à 7, dans lequel l'empreinte à un profil d'empreinte dans un plan transversal par rapport aux bords (11), le profil d'empreinte comprenant une pluralité de points ayant chacun un rayon de courbure (Rc^{PEF}), le rayon de courbure (Rc^{PEF}) de chaque point du profil d'empreinte étant inférieur à 1 mm, de préférence inférieur à 0,7 mm, mieux encore inférieur à 0,5 mm, mieux encore inférieur à 0,3 mm.

9. Procédé (1) selon l'une quelconque des revendications 1 à 8, dans lequel l'enveloppe (2) est cylindrique le long d'un axe (A) et comprend une paroi latérale (4) s'étendant le long de l'axe (A), ladite au moins une empreinte comprenant au moins une empreinte circonférentielle (10a, 10b) s'étendant au moins partiellement autour de l'axe sur la paroi latérale (4).

10. Procédé (1) selon la revendication 9, dans lequel l'enveloppe (2) comprend en outre un fond (3) s'étendant de façon transversale par rapport à l'axe (A), la paroi latérale (4) s'étendant depuis le fond (3) vers une extrémité libre.

11. Procédé (1) selon la revendication 10, dans lequel ladite au moins une empreinte comprend une empreinte en dôme (15) s'étendant centralement sur le fond (3), ladite empreinte en dôme (15) présentant une concavité orientée vers l'extérieur.

12. Procédé (1) selon la revendication 10 ou 11, dans lequel ladite au moins une empreinte comprend au moins une empreinte radiale (16) s'étendant radialement par rapport à l'axe (A) sur le fond (3).

13. Procédé (1) selon l'une quelconque des revendications 1 à 12, dans lequel l'enveloppe (2) a une surface interne délimitant le logement et une surface externe opposée à la surface interne, l'empreinte étant constituée d'une déformation locale des deux surfaces interne et externe de l'enveloppe (2) entre deux parties adjacentes de l'enveloppe, ladite déformation locale étant choisie entre une déformation dans un renfoncement par rapport aux deux parties adjacentes et une déformation en relief par rapport aux deux parties adjacentes.
